# EUROPEAN PATENT APPLICATION

(11) **EP 2 374 763 A1**
(43) Date of publication of application: **12.10.2011**
(21) Application number: 10175223.6
(22) Date of filing: 03.09.2010
(51) Int. Cl.: C02F 1/50, C02F 1/52, C02F 9/00

(54) **Water treatment composition, its use and method for improving water treatment process**

(30) Priority: 06.04.2010 EP 10159133
(71) Applicant: Kemira Oyj, 00180 Helsinki (FI)
(72) Inventor: Karlsson, Göran, SE-25221, Helsingborg (SE); Eskilsson, Krister, SE-26151, Landskrona (SE); Hansen, Bengt, SE-25654, Ramlösa (SE)
(74) Representative: Maskula, Silla Marjatta

(57) **Abstract**

The invention relates to a water treatment composition comprising 3 ― 18 weight-% active metal ions originating from at least one inorganic coagulant compound, and a tetrakis(hydroxymethyl)phosphonium salt selected from the group consisting of tetrakis(hydroxymethyl)phosphonium sulphate, tetrakis(hydroxymethyl)phosphonium chloride, tetrakis(hydroxymethyl)phosphonium bromide and tetrakis(hydroxymethyl)-phosphonium phosphate. The invention relates also to a use of the water treatment composition and to a method for improving biological water treatment process.

## Description

The present invention relates to a water treatment composition, its use and method for improving biological water treatment process and reducing sludge according to the preambles of the enclosed claims.

Environmental concerns are increasing the importance of effective wastewater treatment. In biological water treatment, such as activated sludge process, the water is passed through a reactor, where micro-organisms are used to convert impurities to biomass, i.e. sludge. The use of activated sludge processes in wastewater treatment is increasing, as it offers an effective way to produce high effluent quality. However, when processing wastewater from industrial and municipal sources, the quality and amount of the sludge can vary. It would be advantageous to reduce the biomass generation, as the treatment and disposal of excessive sludge from wastewater treatment may be problematic and/or costly. Disposal to agricultural purposes is becoming more and more limited, and disposal by using landfills or incineration is expensive and provides only limited capacity. The reduction of biological sludge would also improve the dewatering ability in the sludge treatment process.

There has been a need for compounds that would reduce amount of sludge in the wastewater treatment. EP 1 758 825 discloses a water-soluble biocide, which is used to improve the sludge quality by reducing the sludge's tendency towards bulking. The biocide may comprise a hydroxyalkyl-substituted phosphonium compound, which is selected from the group consisting of tetrakis(hydroxymethyl)phosphonium sulphate, tetrakis(hydroxymethyl)phosphonium chloride, tetrakis(hydroxymethyl)phosphonium bromide, tetrakis(hydroxymethyl)phosphonium acetate and tetrakis(hydroxymethyl)-phosphonium phosphate. These compounds, especially tetrakis(hydroxymethyl)-phosphonium sulphate are said to be effective in reducing sludge, even when applied at very low concentrations.

However, use of these sludge-reducing chemicals described in the prior art may create new problems. The effective dosage of the sludge-reducing compounds is so low that the correct dosage is complicated to perform with desired accuracy. Overdose of the sludge-reducing chemicals increase the costs of the process, so the correct dosage is to be preferred. But more importantly, overdose of a water-soluble biocide may disturb the biological process and have a deleterious impact on the waste water purification. A single pump, pumping a concentrated biocide product is thus a risk factor for the performance of the whole process. The detrimental effect might not be noticed at once but may cause problems at later stage. Also, concentrated sludge-reducing chemicals may form an occupational hazard to the employers handling them, whereby use of protective equipment and additional safety measures are required during handling and dosing.

Further, the sludge-reducing chemicals comprising a phosphonium compound may increase phosphate amount in the effluent, which is a drawback from environmental point of view. In general, the major tendency nowadays is to reduce the amount of phosphate in the effluent. Therefore, the correct dosage of the sludge-reducing chemicals is becoming more and more important.

Inorganic coagulants are added to wastewater treatment employing activated sludge process in order to settle colloidal substances in the water. Coagulants also help to remove phosphorus from the water under treatment by precipitation.

An object of this invention is to minimise or even eliminate the disadvantages existing in the prior art.

An object of the present invention is to provide a water treatment composition which is easy and safe to administer to an activated sludge process.

An another object of the present invention is to provide a water treatment composition and method which reduce amount of sludge and improve dewatering of the produced sludge.

Typical water treatment composition according to the present invention comprises
- 3 - 18 weight-% active metal ions originating from at least one inorganic coagulant compound, and
- a tetrakis(hydroxymethyl)phosphonium salt selected from the group consisting of tetrakis(hydroxymethyl)phosphonium sulphate, tetrakis(hydroxymethyl)phosphonium chloride, tetrakis(hydroxymethyl)phosphonium bromide and tetrakis(hydroxymethyl)-phosphonium phosphate.

Typical method according to the present invention for improving biological water treatment process comprises
- leading a flow of water to be treated to a biological treatment reactor,
- leading a flow of water from the biological treatment reactor to a following separation unit, such as clarifier, where the treated water is separated from activated sludge,
- optionally, returning a part of the separated sludge from the separation unit back to the biological treatment reactor, and
- dosing a composition according to the present invention to the water to be treated prior leading it to the biological treatment reactor and/or dosing the composition according to the present invention to the part of the separated sludge which is returned from the separation unit back to the biological treatment reactor..

Typical use of the composition according to the present invention is to improve biological water treatment process by reducing the biomass generation in the process.

Now it has been surprisingly found out that when adding to the water to be treated a water treatment composition comprising at least one inorganic coagulant compound and tetrakis(hydroxymethyl)phosphonium salt it is possible to accurately dose even very low dosages of tetrakis(hydroxymethyl)phosphonium salt. The coagulant compounds are normally added at significantly higher dosage to the process than tetrakis(hydroxymethyl)phosphonium salts. It was suddenly realised that tetrakis-(hydroxymethyl)phosphonium salt can be incorporated into the bulk solution of coagulant compound without its decomposition or oxidation to tri(hydroxymethyl)phosphine oxide. Thus the concentration of tetrakis-(hydroxymethyl)phosphonium salt in the water treatment composition remains so low, that it will not form an occupational hazard for the employers. However, at the same time, the amount of the water treatment composition according to the present invention is so high that the accurate dosing is simple and easy to optimise.

Eventual overdose of the water treatment composition according to the present invention may be easily noticed and corrected before it causes harm to the process, because an overdose of an inorganic coagulant compound is readily noticed by the normal monitoring of the effluent water quality. In the present invention overdose of the inorganic coagulant compound is intrinsically linked to the overdose of a tetrakis(hydroxymethyl)phosphonium salt.

The water treatment composition according to the present invention also considerably reduces the amount of sludge which is generated in an activated sludge process. It is capable both the sludge reduction and common coagulation action with no adverse effects. The reduction of generated sludge improves the dewatering and minimizes the total amount of sludge.

It has also been surprisingly found out that the stability and thus performance of a tetrakis(hydroxymethyl)phosphonium salt is not lost in a composition comprising both the tetrakis(hydroxymethyl)phosphonium salt and an inorganic coagulant. The water treatment composition according to the present invention may be prepared for example by diluting a commercial 75 weight-% tetrakis(hydroxymethyl)phosphonium salt solution to less than 6 weight-% solution with a coagulant solution. The coagulant solution which may be used for diluting the stock solution of tetrakis(hydroxymethyl)phosphonium salt comprises typically 3 ― 14 weight-% of active metal ion and water. This water treatment composition retains its effectiveness even during prolonged storage.

In this application the term coagulant or coagulant compound means an inorganic salt, especially a salt of iron or aluminium, which has ability to precipitate phosphate. Inorganic coagulants are used for precipitation of soluble species, such as phosphates and for aggregation of colloidal particles. They are commonly used in prior art in activated sludge systems in waste water treatment operations. The coagulants used in the present invention are free from organic compounds, such as high molecular weight organic polymers, based on polyacryl amide. Especially inorganic coagulant compounds should not be mixed up with flocculants, which are high molecular weight organic polymers, based on polyacryl amide, and used for flocculation of large particles and already coagulated material. Flocculants are not normally employed in activated sludge process as they do not precipitate phosphate ions and they may cause unwanted sedimentation.

According to one embodiment of the invention the active metal ion is aluminium or iron. This means that the inorganic coagulant compound is aluminium salt or iron salt. The inorganic coagulant compound may be ferric sulphate, ferric chloride sulphate, ferric chloride, ferrous sulphate, ferrous chloride sulphate, ferrous chloride, aluminium chloride, polyaluminium chloride, aluminium sulphate, sodium aluminate, aluminium chlorohydrate or any of their mixtures. The amount of active metal ion in the water treatment composition is typically 3 ― 18 weight-%, more typically 3.5 ― 16 weight-%, preferably 4 ― 14 weight-%. In case the active metal ion is iron(III), the amount of active metal ion in the water treatment composition is typically 10 ― 14 weight-%. In case the active metal ion is iron(II), the amount of active metal ion in the water treatment composition is typically 6 - 15 weight-%. In case the coagulant compound comprises three valent aluminium ion or aluminium sulphate, their amount in the water treatment composition is typically 4 ― 5 weight-%, calculated as active metal ion. In case the coagulant compound comprises aluminium chloride, its amount in the water treatment composition is typically 3 - 14 weight-% as active metal ion.

The chemical structure of tetrakis(hydroxymethyl)phosphonium salt is presented by formula I 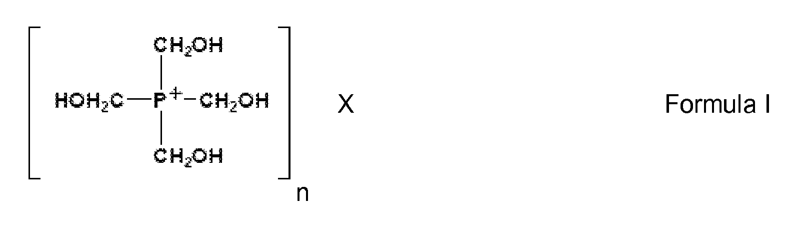 where
n is 1 ― 3 and
X represents an anion selected from the group comprising sulphate (SO₄²⁻), chloride (Cl⁻), bromide (Br⁻) and phosphate (PO₄³⁻).

Preferably, the water treatment composition comprises tetrakis(hydroxymethyl)-phosphonium salt, which is tetrakis(hydroxymethyl)phosphonium sulphate or tetrakis-(hydroxymethyl)phosphonium chloride, more preferably tetrakis(hydroxymethyl)-phosphonium sulphate.

According to one embodiment of the invention the amount of tetrakis(hydroxymethyl)phosphonium salt in the water treatment composition is in the range 0.1 - 6 weight-%, typically 0.15 ― 5 weight-%, more typically 0.4 - 3.0 weight-%, even more typically 1.0 - 3.0 weight-%. Preferably the amount of tetrakis(hydroxymethyl)phosphonium salt is 2.0 - 2.95 weight-%.

The water treatment composition may also comprise organic substances, such as polyamines or polydiallyldimethylammonium chloride (polyDADMAC).

According to one embodiment of the invention the water treatment composition consists solely of a tetrakis(hydroxymethyl)phosphonium salt, preferably tetrakis(hydroxymethyl)phosphonium sulphate, an inorganic coagulant compound, preferably having iron or aluminium as the active ion, and water.

The biological water treatment process may comprise one treatment reactor, or two or more treatment reactors arranged in parallel or in series. From the treatment reactor or the last treatment reactor in series the treated or purified water is led to a separation unit, such as clarifier. A major part of the sludge may be recycled from the separation unit back to the treatment reactor. The separation unit may be any type of gravity settler, dissolved air flotation (DAF), lamella clarifier or it may be a membrane filter.

According to one embodiment of the invention the use of water treatment composition comprising inorganic coagulant compound and a tetrakis(hydroxymethyl)phosphonium salt is suitable in a water treatment process, which has an activated sludge process treatment reactor having a load of 0.2 - 2 kg BOD₇/kg MLSS*day, preferably 0.6 - 1.5 kg BOD₇/kg MLSS*day. In this context MLSS stands for Mixed Liquor Suspended Solids, and BOD₇, stands for biological oxygen demand under seven days, i.e. it indicates how much dissolved oxygen is needed by aerobic biological organisms in a body of water to break down organic material present in a given water sample at certain temperature over a period of seven days.

According to one embodiment of the invention the water, which is treated by using the water treatment composition according to the present invention, is an industrial waste water with high BOD value, especially an effluent originating from food industry and being typically difficult to dewater.

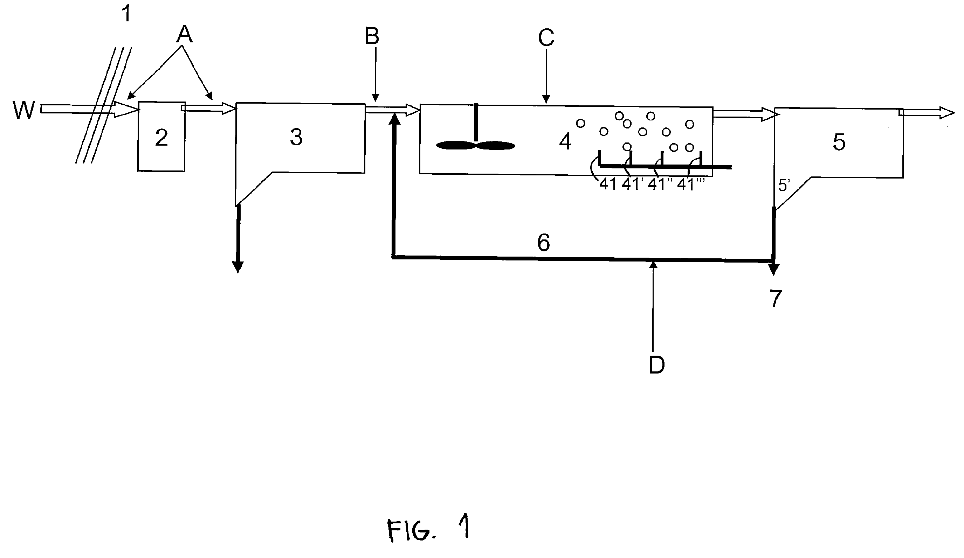

The invention is described in more detail with reference to the enclosed figure, where
- Figure 1: shows schematically a water treatment process where a water treatment composition according to one embodiment of the present invention may be used.

The figure is to be taken as purely schematical and is not to be construed as limiting the scope of the claims.

In Figure 1 is shown schematically a water treatment process where a water treatment composition according to one embodiment of the present invention may be used. Water W to be treated is led to a preliminary treatment stage 1, comprising for example screening, for separation of large solid particles. From the preliminary treatment stage 1 the water is led to a highly aerated tank 2 with a sand trap, with short retention time. Sand and other heavy particles are separated from the water in tank 2. The water flow is then led to a primary clarifier 3, where large part, typically more than 30 %, of the suspended solids settle, forming the primary sludge. The settled solids particles are removed from the bottom part of the primary clarifier 3. From the primary clarifier 3, the water is led to treatment reactor 4, which is the activated sludge tank. Air or oxygen is fed to the reactor 4 by using an aeration system comprising a number of aeration elements 41, 41', 41 ", 41"'. The treatment reactor 4 may also have sections with anaerobic or anoxic conditions where the activated sludge is kept in suspension by mixers.

Biologically treated water is led out of the reactor 4 to the following separation unit 5. In the separation unit 5 the treated water is allowed to settle, so that sludge is sedimented on the bottom 5' of the separation unit 5. From the bottom 5' the sludge is taken out, and a part of it is recirculated back to treatment reactor 4 by using pipeline 6. Excess sludge is not recycled to the treatment reactor 4, but it is excised from the water treatment process through connection 7. The use of the water treatment composition according to the present invention will minimise the volume of the sludge which has to be removed through connection 7.

The water treatment composition according to the present invention is typically dosed to the water flow before it is led to the treatment reactor 4 at point B. Dosing of the water treatment composition may also be performed before the aerated tank 2 or before the primary clarifier 3, at point A, or directly into the treatment reactor 4, at point C. The water treatment composition may alternatively be dosed into the return sludge flow before it is led back to the treatment reactor 4, at point D. The dosing of the water treatment composition may be performed at one or several of these dosing points.

### EXAMPLE

A water treatment composition, comprising tetrakis(hydroxymethyl)phosphonium sulphate (THPS) and aluminium sulphate (ALS) is tested by using a paper machine circulation water, known to contain bacteria.

Following solutions are used
Reference: untreated paper machine circulation water;
Test solution (I): 2 % THPS, diluted from 75 % THPS, in tap water, freshly prepared;
Test solution (II): 2 % THPS diluted from 75 % THPS, in ALS, freshly prepared;
Test solution (III): ALS solution.
ALS = Aluminum Sulphate, amount of active Al in the solution 4.3 %

Size of each water sample solution is 30 ml. The test solutions are dosed into the water sample solutions, whereby the concentration of the test solutions in the water sample is 250 ppm, 500 ppm, 1000 ppm and 1250 ppm. The contact time is 24 hours, i.e. sample solutions are allowed to effect on the bacteria in the water samples for 24 hours.

After the contact time, the amount of aerobic bacteria is measured by using a standard dilution plating technique. Aerobic bacteria are measured, the agar used is R2A (Difco™). Plates are incubated in + 45 °C for 2 days. For the result, all the colonies are counted from the plates after the incubation time.

Results are shown in Table 1.

**Table 1. Experiment results.**

| **Sample name** | **24 h** | **Reduction in** % |
|---|---|---|
| Reference | 11 000 000 | |
| | | |
| 2 % THPS in water; 250 ppm | 5 000 000 | 55 % |
| 2 % THPS in ALS; 250 ppm | 4 000 000 | 64 % |
| ALS (14 %); 250 ppm | 8 000 000 | 27 % |
| | | |
| 2 % THPS in water; 500 ppm | 1 000 000 | 91 % |
| 2 % THPS in ALS; 500 ppm | 23 000 | 99.80 % |
| ALS (14 %); 500 ppm | 760 000 | 93.10 % |
| | | |
| 2 % THPS in water; 1000 ppm | 4 100 | 99.96 % |
| 2 % THPS in ALS; 1000 ppm (* | <100 | 100.00 % |
| ALS (14 %); 1000 ppm | 180 000 | 98.36 % |
| | | |
| 2 % THPS in water; 1250 ppm | 200 | 99,99 % |
| 2 % THPS in ALS; 1250 ppm | <100 | 100.00 % |
| ALS (14 %); 1250 ppm | 10 000 | 99.91 % |

| | | |
|---|---|---|
| (* detection limit 100 cfu/ml | | |

It can be concluded from Table 1 that mixing THPS with an inorganic coagulant may give a synergistic effect to the functionality of the THPS.

Even if the invention was described with reference to what at present seems to be the most practical and preferred embodiments, it is appreciated that the invention shall not be limited to the embodiments described above, but the invention is intended to cover also different modifications and equivalent technical solutions within the scope of the enclosed claims.

## Claims

1. Water treatment composition comprising
- 3 - 18 weight-% active metal ions originating from at least one inorganic coagulant compound, and
- a tetrakis(hydroxymethyl)phosphonium salt selected from the group consisting of tetrakis(hydroxymethyl)phosphonium sulphate, tetrakis(hydroxymethyl)phosphonium chloride, tetrakis(hydroxymethyl)phosphonium bromide and tetrakis(hydroxymethyl)-phosphonium phosphate.

2. Composition according to claim 1, **characterised in that** the active metal ion is aluminium or iron.

3. Composition according to claim 1 or 2, **characterised in that** the inorganic coagulant compound is ferric sulphate, ferric chloride sulphate, ferric chloride, ferrous sulphate, ferrous chloride sulphate, ferrous chloride, aluminium chloride, polyaluminium chloride, aluminium sulphate, sodium aluminate, aluminium chlorohydrate or their mixtures.

4. Composition according to claim 1, 2 or 3, **characterised in that** the amount of active metal ion in the water treatment composition is 4 - 14 weight-%

5. Composition according to any of claims 1 to 3, **characterised in that** the composition comprises 0.1 - 6 weight-% of tetrakis(hydroxymethyl)phosphonium salt.

6. Composition according to claim 5, **characterised in that** the composition comprises 0.15 ― 5 weight-%, of tetrakis(hydroxymethyl)phosphonium salt.

7. Composition according to claim 6, **characterised in that** the composition comprises 1.0 - 3.0 weight-% of tetrakis(hydroxymethyl)phosphonium salt.

8. Composition according to any of preceding claims, **characterised in that** the tetrakis(hydroxymethyl)phosphonium salt is tetrakis(hydroxymethyl)phosphonium sulphate or tetrakis(hydroxymethyl)phosphonium chloride.

9. Composition according to claim 8, **characterised in that** the tetrakis(hydroxymethyl)phosphonium salt is tetrakis(hydroxymethyl)phosphonium sulphate.

10. Use of the composition according to any of the claims 1 to 9 to improve biological water treatment process by reducing the biomass generation in the process.

11. Use according to claim 10, **characterised in that** the water treatment process has an activated sludge process treatment reactor having a load of 0.2 - 2 kg BOD₇/kg MLSS*day.

12. Method for improving biological water treatment process, which comprises
- leading a flow of water to be treated to a biological treatment reactor,
- leading a flow of water from the biological treatment reactor to a following separation unit, such as clarifier, where the treated water is separated from activated sludge,
**characterised in** dosing a composition according to any of the claims 1 - 6 to the water to be treated prior leading it to the biological treatment reactor and/or dosing the composition according to any of the claims 1 - 6 to the part of the separated sludge which is returned from the separation unit back to the biological treatment reactor.

13. Method according to claim 12, **characterised in** returning a part of the separated sludge from the separation unit back to the biological treatment reactor,
